# NEUE EUROPÄISCHE PATENTSCHRIFT

(11) **EP 0 144 948 B2**
(45) Veröffentlichungstag und Bekanntmachung des Hinweises auf die Entscheidung über den Einspruch: **15.02.1995**
(45) Hinweis auf die Patenterteilung: 14.08.1991
(21) Anmeldenummer: 84114641.8
(22) Anmeldetag: 01.12.1984
(51) Int. Cl.: C08J 7/04, G03C 1/91, B44D 3/18

(54) **Polyesterfolie mit vernetzter acrylischer Haftvermittlerbeschichtung**
Polyester film with a cross-linked acrylic adhesion promoting layer
Feuille de polyester à couche d'encrage acrylique réticulée

(30) Priorität: 12.12.1983 US 560648
(43) Veröffentlichungstag der Anmeldung: 19.06.1985
(73) Patentinhaber: HOECHST CELANESE CORPORATION, Somerville, N.J. 08876 (US)
(72) Erfinder: Culbertson, Edwin C., Greer, SC 29651 (US); Farrar, Grover L., Greenville, SC 29601 (US)
(74) Vertreter: Meyer-Dulheuer, Karl-Hermann, Dr.

(56) Entgegenhaltungen:
- EP-A- 0 027 699
- EP-A- 0 035 614
- FR-A- 2 182 057
- GB-A- 1 497 101
- GB-A- 1 499 706
- US-A- 4 391 767
- Eur.Plast.News,vol. 10, No. 3. March 1983, p. 40 "Novel Film Reclaim"

## Beschreibung

Die vorliegende Erfindung betrifft schmelzextrudierte, orientierte, selbsttragende Polyesterfolie, die ein- oder beidseitig mit vernetzten Acrylpolymeren beschichtet ist, welche die Oberfläche der Polyesterfolie für zusätzlich aufgebrachte reprografische Beschichtungen oder Mattbeschichtungen aufnahmefähig machen.

Orientierte Polyesterfolie, insbesondere biaxial orientierte Folie aus Polyethylenterephthalat (PET), wird in großem Umfang als Trägermaterial für Zeichenfolie, fotografischen und reprografischen Film sowie für Verpakkungs- und Etikettierungszwecke eingesetzt.

Da PET-Folie hydrophob ist und Beschichtungen nicht leicht annimmt, muß sie in den meisten Fällen, in denen sie als Basis- oder Trägerfolie für weitere Beschichtungen dienen soll, zunächst ein- oder beidseitig mit einer Haftvermittlerbeschichtung versehen werden, die an der Folie haftet und gleichzeitig auch für weitere aufgebrachte Beschichtungen aufnahmefähig ist. Aus US-A-26 27 088 und US-A-26 98 240 ist beispielsweise eine Haftvermittlerbeschichtung für PET-Folie bekannt, die aus einem Terpolymeren aus Vinylidenchlorid, Acrylester und Itaconsäure besteht. Diese Haftvermittlerbeschichtung soll eine ausgezeichnete Haftung an der Polyesteroberfläche und auch an nachträglich aufgebrachten fotografischen Gelatineschichten auf der Basis von Wasser oder Alkohol aufweisen.

Eine weitere aus US-A-36 74 531 bekannte Haftvermittlerbeschichtung für PET-Folie enthält Copolymere eines Vinylhalogenesters, z.B. Vinylchloracetat, die mit zahlreichen anderen Monomeren copolymerisiert sein können, z.B. mit Acryl- und Methacrylsäure, -estern und -amiden, Olefinen und Vinylalkohol. Derartige Copolymere können auch durch Melamin- oder Harnstoff-Formaldehydharz in der Zusammensetzung vernetzt sein. Die haftvermittlerbeschichtete PET-Folie soll eine verbesserte Haftung gegenüber einer Vielzahl von Beschichtungen, u.a. auch von reprografischen Beschichtungen, aufweisen.

Einige dieser und andere Haftvermittlerbeschichtungen für Polyesterfolie können zwar das Haftvermögen von PET-Folie wirkungsvoll verbessern, für den Folienhersteller ist es jedoch auch wichtig, daß während der Produktion anfallender Folienabfall im Folienherstellungsverfahren regenierbar ist. Folienabfall wird normalerweise zerkleinert, geschmolzen, zu Pellets verarbeitet, mit Originalpolyesterrohstoff vermischt, erneut geschmolzen und wieder dem Folienextruder zugeführt. Während der Verarbeitung von PET-Folienregenerat können die Temperaturen zwischen 270 und 310°C betragen. Viele der obengenannten Haftvermittlerzusammensetzungen sind bei diesen Temperaturen nicht beständig und neigen dazu, die fertige orientierte PET-Folie, die erhebliche Mengen an solchem haftvermittlerbeschichteten Folienregenerat enthält, insbesondere nach wiederholten Durchgängen durch den Extruder, in unerwünschter Weise gelb oder schwarz zu verfärben. Das ist z.B. bei den als Haftvermittlerbeschichtungen für PET verwendeten, Vinylidenchlorid enthaltenden Polymeren gemäß US-A-26 27 088 und US-A-26 98 240 der Fall und ebenso bei den Haftvermittlerbeschichtungen auf der Basis von Vinylchloracetat enthaltenden Copolymeren gemäß US-A-36 74 538. Es wurde gefunden, daß die Verfärbung und der Abbau dieser Haftvermittlerbeschichtungen während des Wiedergewinnungsprozesses höchstwahrscheinlich auf die bei chlorhaltigen Haftvermittlerschichten auftretende Entwicklung von Chlorgas oder Chlorwasserstoff zurückzuführen sind.

Als weitere Haftvermittler sind die thermofixierten Acryl- oder Methacrylbeschichtungen gemäß US-A-38 19 773 bekannt, die aus wäßrigem Medium auf PET-Folie aufgebracht werden können. Eine derartige Haftvermittlerbeschichtung verbessert die Haftung von darauf aufgebrachten reprografischen Schichten und Zeichenschichten auf der Basis von organischen Lösemitteln. In diesem Patent wird auch beschrieben, daß eine mit den dort genannten thermofixierten Acrylbeschichtungen haftvermittlerbeschichtete Folie regeneriert werden kann, indem man sie mit mindestens 50 Gew.-% an Originalpolyesterrohstoff mischt und den Folienextruder erneut mit dieser Mischung beschickt. In der Patentschrift wird die Herabsetzung der durch bestimmte Haftvermittlerbeschichtungen verursachten Probleme der Verfärbung und des Abbaus erwähnt. Verglichen mit den oben beschriebenen chlorhaltigen Haftvermittlerbeschichtungen trifft das zwar zu, doch die Acrylbeschichtungen nach diesem Patent, die mit den dort beschriebenen harzförmigen Vernetzungsmitteln vernetzt sind, verursachen immer noch eine unerwünschte Gelbfärbung einer fertigen Folie, die eine solche haftvermittlerbeschichtete Folie als Regenerat enthält, insbesondere im Vergleich zu einer Folie, die nur aus Originalpolyesterrohstoff besteht.

Ausgehend von dem aufgezeigten Stand der Technik liegt der vorliegenden Erfindung die Aufgabe zugrunde, eine Haftvermittlerbeschichtung für Polyesterfolien zu schaffen, die neben ihren im Vergleich zu den aus dem Stand der Technik bekannten Haftvermittlerbeschichtungen mindestens gleichwertigen Haftvermittlereigenschaften darüber hinaus nicht zu einer meßbaren Gelbfärbung der fertigen Folie führt, wenn eine mit der Haftvermittlerbeschichtung beschichtete Folie als Regenerat dem Folienherstellungsprozeß zugeführt wird, insbesondere im Vergleich zu einer Folie, die nur aus Originalpolyesterrohstoff besteht.

Gelöst wird diese Aufgabe durch eine Folie der eingangs genannten Gattung, deren kennzeichnende Merkmale darin zu sehen sind, daß die Polyesterfolie aus einer Mischung von
A) Originalpolyesterrohstoff mit
B) bei der Herstellung von haftvermittlerbeschichteten Polyesterfolien anfallendem Regenerat
besteht und daß die Haftvermittlerbeschichtung im wesentlichen aus einem oder mehreren Copolymeren gebildet ist, jeweils bestehend aus:
i) mindestens 50 Gew.-% acrylischen und/oder methacrylischen Monomeren;
ii) 1 bis 15 Gew.-% eines Monomeren mit einer funktionellen Gruppe, die befähigt ist, in copolymerisiertem Zustand unter Einwirkung von erhöhten Temperaturen intermolekulare Vernetzungen auszubilden; und die ausgewählt ist aus der Gruppe umfassend Amino-, Säureamid-, Säureanhydrid-, N-methylol-, Carboxyl-, Hydroxyl- und Isocyanatgruppen
iii) einem oder mehreren einfach ethylenisch ungesättigten, halogenfreien Monomeren in einer Menge bis zu 49 Gew.-%;
wobei die Prozentangaben jeweils auf das Gesamtgewicht des die Haftvermittlerbeschichtung bildenden Copolymeren bezogen sind.

Die als erfindungsgemäße Haftvermittlerbeschichtungen eingesetzten Acrylcopolymeren bestehen im wesentlichen aus mindestens 50 Gew.-% eines oder mehrerer polymerisierter acrylischer und/oder methacrylischer Monomerer und 1 bis 15 Gew.-% eines copolymerisierbaren Comonomeren, das in copolymerisiertem Zustand unter Einwirkung von erhöhter Temperatur, ohne Zusatz eines gesonderten harzförmigen Vernetzungsmittels, zur Ausbildung von intermolekularen Vernetzungen befähigt ist.

Die acrylische Komponente der Haftvermittlercopolymeren ist vorzugsweise in einer Menge von 50 bis 99 Gew.-% anwesend und besteht bevorzugt aus einem Ester der Acryl- oder Methacrylsäure, insbesondere einem Alkylester, dessen Alkylgruppe bis zu zehn C-Atome enthält, wie z.B. die Methyl-, Ethyl-, n-Propyl-, Isopropyl-, n-Butyl-, Isobutyl-, tertiäre Butyl-, Hexyl-, 2-Ethylhexyl-, Heptyl- und n-Octylgruppe. Acrylcopolymere, die von einem niederen Alkylacrylat (C₁ bis C₄) abgeleitet sind, insbesondere Ethylacrylat, ergeben zusammen mit einem niederen Alkylmethacrylat eine besonders gute Haftung zwischen der Polyestertolie und darauf aufgebrachten reprografischen Beschichtungen oder Mattbeschichtungen. Ganz besonders bevorzugt werden Haftvermittlercopolymere aus einem Alkylacrylat, z.B. Ethylacrylat oder Butylacrylat, zusammen mit einem Alkylmethacrylat, z.B. Methylmethacrylat, insbesondere zu gleichen molaren Anteilen und in einer Gesamtmenge von 70 bis 95 Gew.-%, eingesetzt. Das Acrylatcomonomere solcher Acryl/Methacrylkombinationen ist vorzugsweise in einem Anteil von 15 bis 65 Mol-% anwesend und das Methacrylatcomonomere vorzugsweise in einem Anteil, der im allgemeinen um 5 bis 20 Mol-% größer ist als der Anteil des Acrylatcomonomeren. Das Methacrylat ist vorzugsweise in einem Anteil von 35 bis 85 Mol-% in der Kombination enthalten.

Geeignete zur Ausbildung von Vernetzungen befähigte Comonomere (Komponente ii) sind z.B. N-Methylolacrylamid, N-Methylolmethacrylamid und die entsprechenden Ether; Carboxylgruppen enthaltende Monomere wie z.B. Crotonsäure, Itaconsäure oder Acrylsäure; Anhydride wie z.B. Maleinsäureanhydrid oder Itaconsäureanhydrid; Hydroxylgruppen enthaltende Monomere wie z.B. Allylalkohol und Hydroxyethyl- oder. Hydroxypropylacrylat oder - methacrylat: und Isocyanate wie z.B. Vinylisocyanat oder Allylisocyanat.

Von den obengenannten Comonomeren werden N-Methylolacrylamid und N-Methylolmethacrylamid bevorzugt, und zwar in erster Linie deswegen, weil Copolymerenketten, die eines dieser Monomere enthalten, unter der Einwirkung von erhöhten Temperaturen zur Kondensation miteinander und somit zur Ausbildung der gewünschten intermolekularen Vernetzungen befähigt sind. Bei Copolymeren, welche die anderen funktionellen Monomeren enthalten, ist es notwendig, Mischungen aus mindestens zwei Copolymeren mit verschiedenen funktionellen Comonomeren herzustellen, wenn man die gewünschte Vernetzung erzielen will, z.B. Mischen eines Acryl/Crotonsäure-Copolymeren mit einem Acrylcopolymeren, das als funktionelle Gruppen Isocyanat-, oder N-Methylolgruppen enthält, die befähigt sind, mit sauren funktionellen Gruppen zu reagieren.

Weitere spezifische Kombinationen solcher gemischten Acrylcopolymeren umfassen Copolymere mit Monomeren, die als funktionelle Gruppen N-Methylo- oder N-Methylolethergruppen enthalten, in Verbindung mit Copolymeren mit Monomeren, die als funktionelle Gruppen Carboxyl-, Hydroxyl- oder Aminogruppen enthalten; Copolymere mit Monomeren, die als funktionelle Gruppen Isocyanatgruppen enthalten, in Verbindung mit Copolymeren mit Monomeren, die als funktionelle Gruppen Carboxyl- oder Hydroxylgruppen enthalten, usw. Vorzugsweise sind die in den gemischten Copolymerensystemen enthaltenen funktionellen Monomeren in etwa äquimolaren Mengen anwesend.

Die acrylischen Copolymeren können auch mit bis zu 49 Gew.-% eines oder mehrerer halogenfreier, nicht-acrylischer, einfach ethylenisch ungesattigter Monomerer interpolymerisiert sein. Geeignete Comonomere sind z.B. Dialkylmaleate wie z.B. Dioctylmaleat, Diisooctylmaleat und Dibutylmaleat, Vinylester einer Versatic-Säure, Vinylacetat, Styrol, Acrylnitril und ähnliche Stoffe.

Die für die Zwecke dieser Erfindung bevorzugten zur Vernetzung befähigten, gemischten Copolymerenzusammensetzungen sind Mischungen im Verhältnis von etwa 50 : 50 eines Ethylacrylat/Methylmethacrylat/Methacrylamid-Copolymeren mit einem Ethylacrylat/Methylmethacrylat/N-Methylolacrylamid-Copolymeren; oder Zusammensetzungen auf der Basis von Copolymeren von Ethylacrylat/Methylmethacrylat/N-Methylolacrylamid wie z.B. Copolymere, die 50 bis 99 Gew.-% an Acryl- und/oder Methacrylmonomeren, 0 bis 49 Gew.-% des einfach ethylenisch ungesättigten Monomeren und 1 bis 15 Gew.-% an N-Methylolacrylamid enthalten. Besonders bevorzugt werden Copolymere eingesetzt, die 70 bis 95 Gew.-% an Acryl- und/oder Methacrylmonomeren, 0 bis 25 Gew.-% des einfach ethylenisch ungesättigten Monomeren und 5 bis 10 Gew.-% an N-Methylolacrylamid enthalten.

Wie bereits erwähnt erfordern die erfindungsgemäßen polymeren acrylischen Haftvermittlerzusammensetzungen nicht die Anwesenheit eines fremden Vernetzungsmittels wie z.B. eines Melamin- oder Harnstoff-Formaldehyd-Kondensationsproduktes, das beim Regenerieren eine Gelbfärbung von PET-Folie verursacht.

Selbstvernetzende Acrylcopolymere analog zu den oben beschriebenen sind zwar im Stand der Technik generell als geeignete Haftvermittlermaterialien für Polyesterfolie beschrieben worden, so z.B. in EP-A-0 027 699 und EP-A-0 035 614, aber keine dieser Veröffentlichungen würdigt die Regenerierbarkeit der haftvermittlerbeschichteten Folie oder insbesondere die verbesserte Regenerierbarkeit einer Folie, die mit selbstvernetzenden Acrylcopolymeren haftvermittlerbeschichtet ist, im Vergleich zu einer Folie, die mit Acrylcopolymeren haftvermittlerbeschichtet ist, welche durch gesonderte Zugabe eines harzförmigen Vernetzungsmittels wie z.B. eines Melamin-Formaldehyd- oder Harnstoff-Formaldehydharzes vernetzt wurden.

Die erfindungsgemäße Haftvermittlerbeschichtung wird vorzugsweise in Form einer wäßrigen Dispersion oder als Latex mit einem Feststoffgehalt von 0,5 bis 15%, vorzugsweise 3 bis 10%, auf die Trägerfolie aus Polyester aufgebracht. Der Feststoffgehalt ist bevorzugt so bemessen, daß sich eine Trockenschichtdicke im Bereich von etwa 0,0025 bis 0,25 »m ergibt; in Trockengewicht ausgedrückt bedeutet dies einen Feststoffgehalt von 0,00305 g/m² bis 0,305 g/m². Bevorzugt hat die getrocknete Haftvermittlerbeschichtung aus vernetztem Acrylcopolymerem eine Dicke im Bereich von ca. 0,015 bis 0,05 »m, wobei 0,025 »m die angestrebte Dicke ist.

Die Haftvermittlerbeschichtung kann in jedem geeigneten Stadium während der Folienherstellung auf die Polyesterfolie aufgebracht werden, d.h. vor oder während der Streckvorgänge, und sie wird nach dem Aufbringen durch Beaufschlagung mit Wärme vernetzt. Die entstehende haftvermittlerbeschichtete Polyesterfolie weist eine ausgezeichnete Haftung gegenüber vielen nachträglich aufgebrachten Beschichtungen auf der Basis organischer Lösemittel auf und eignet sich zur Verwendung als Regenerat bei der Wiederverarbeitung zu Polyesterfolie, ohne eine nennenswerte Verfärbung oder einen Abbau der Folie zu verursachen.

Für die Zwecke dieser Erfindung besteht die orientierte Polyesterträgerfolie vorzugsweise aus Polyethylenterephthalat, obwohl die Erfindung sich ebenso auf Folien auf der Basis eines durch Polykondensation eines Glykols, z.B. Ethylenglykol oder Butandiol und deren Mischungen, mit Terepthalsäure oder Mischungen von Terephthalsäure mit anderen Dicarbonsäuren wie z.B. Isophthalsäure, Diphensäure und Sebacinsäure oder deren polyesterbildende Äquivalente entstandenen kristallisierbaren Polyesters anwenden läßt, wobei diese Polyester nach bekannten Verfahren hergestellt werden. Die Folie kann nach gleichfalls bekannten Verfahren und mit bekannten Vorrichtungen hergestellt werden. Es wird z.B. eine Polyesterschmelze bereitet, die als amorphe Folie auf eine hochglanzpolierte rotierende Gießwalze extrudiert wird, wo sie sich zur gegossenen Folie verfestigt. Die Folie wird anschließend axial gestreckt, und zwar bei einer monoaxial orientierten Folie in einer Richtung, d.h. entweder in Extrusionsrichtung (längs) oder senkrecht zur Extrusionsrichtung (quer), und bei einer biaxial orientierten Folie in zwei Richtungen, d.h. sowohl in Längs- als auch in Querrichtung. Bei dem ersten an der gegossenen Folie durchgeführten Streckschritt kann beliebig in einer dieser beiden rechtwinklig zueinander verlaufenden Richtungen gestreckt werden. Der Verstreckungsgrad, durch den die Folie Festigkeit und Zähigkeit erhält, kann etwa das 3- bis 5fache der ursprünglichen Abmessung der gegossenen Folie in einer oder beiden Richtungen betragen. Vorzugsweise liegt der Verstreckungsgrad im Bereich zwischen etwa dem 3,2-und 4,2fachen der ursprünglichen Abmessung.

Die Streckvorgänge werden bei Temperaturen im Bereich etwa ab der Glasübergangstemperatur bis unterhalb der Temperatur, bei der das Polymere weich wird und schmilzt, durchgeführt.

Nach dem Strecken wird die Folie für die zur Kristallisation des Polyesters notwendige Dauer wärmebehandelt. Durch die Kristallisation erhält die Folie Festigkeit und gute Zugfestigkeitseigenschaften. Die Wärmebehandlung von Polyethylenterephthalat wird bei einer Temperatur im Bereich zwischen etwa 190°C und 240°C, vorzugsweise zwischen etwa 215°C und 235°C, durchgeführt.

Die erfindungsgemäße Beschichtung wird vorzugsweise in Form einer wäßrigen Dispersion oder Emulsion während der Folienherstellung "in line" aufgebracht: Auf der Stufe vor dem Verstrecken, also zum Zeitpunkt zwischen dem Vergießen der amorphen Folie und dem ersten Strecken, oder auf der Stufe zwischen den Streckvorgängen, also nach dem Strecken in einer Richtung und vor dem Strecken in der zweiten Richtung, wie es z.B. in US-A-3 819 773 beschrieben ist. Die der Folie beim Strecken oder den abschliessenden Konditionierstufen zugeführte Wärme reicht normalerweise aus, um das Wasser und andere flüchtige Bestandteile aus der Haftvermittlerbeschichtung zu vertreiben und diese zu trocknen und zu vernetzen.

In einer bevorzugten Ausführung wird die Haftvermittlerbeschichtung nach dem uniaxialen Strekken der Folie, d.h. nach dem Strecken der Folie in einer Richtung, jedoch vor dem Strecken in der im rechten Winkel dazu verlaufenden Richtung, aufgebracht. In einer weiteren bevorzugten Ausführung wird die Polyesterfolie vor dem Beschichten zunächst in Längsrichtung gestreckt. In dieser bevorzugten Ausführung wird die Folie nach dem Strekken in Längsrichtung nach einem der auf diesem Gebiet angewendeten bekannten Verfahren beschichtet. Das Beschichten kann z.B. durch Walzenbeschichtung, Sprühbeschichtung, Gravurbeschichtung, Schlitzgießerantrag oder Tauchbeschichtung erfolgen. Bevorzugt wird die Polyesterfolie mit Gravurwalzen beschichtet. Vor dem Beschichten wird die uniaxial gestreckte Folie vorzugsweise noch in bekannter Weise einer Coronabehandlung in einer Coronaentladevorrichtung unterzogen. Die Coronabehandlung vermindert die Hydrophobie der Polyesterfolienoberfläche, wodurch die wäßrige Beschichtung die Oberfläche besser benetzen und somit die Haftung der Beschichtung an der Oberfläche verbessern kann.

Die Beschichtung kann ein- oder beidseitig aus die Folie aufgebracht werden. Es ist aber auch möglich, nur eine Seite der Folie mit der erfindungsgemäßen Beschichtung zu versehen und auf die Gegenseite eine andere Beschichtung aufzubringen. Die Beschichtungsrezeptur kann bekannte Zusätze enthalten wie z.B. Antistatika, Netzmittel, Tenside, pH-Regulatoren, Antioxidantien, Farbstoffe, Pigmente, Anti-Blockmittel wie z.B. kolloidales SiO₂ usw. Normalerweise ist es angebracht, ein Tensid einzuarbeiten, um die Fähigkeit der wäßrigen Beschichtung zur Benetzung der Trägerfolie aus Polyester zu erhöhen.

Die erfindungsgemäßen Haftvermittlerbeschichtungen haben eine ausgezeichnete Wärmestabilität, und deshalb kann der bei der Herstellung anfallende Abfall der beschichteten Folie, mit frischem Polyester gemischt, wieder geschmolzen und zur Herstellung von orientierter Folie erneut in den Folienextruder eingespeist werden. Mit den hier verwendeten Begriffen "frischer Polyester" oder "Originalpolyesterrohstoff" wird ein Polyester bezeichnet, der selbst kein Regenerat fertiger Produkte wie z.B. einer Folie oder Faser ist, sondern zum erstenmal bei der Herstellung solcher Produkte eingesetzt wird. Eine so hergestellte Folie mit einem Gehalt von 5 bis zu etwa 70 Gew.-% an Regenerat aus beschichtetem Abfall, vorzugsweise mit einem Gehalt von jeweils 50 Gew.-% an Regenerat und frischem Polyester, erweist sich als gut in Qualität, Farbe und Aussehen und zeigt höchstens einen sehr geringen wahrnehmbaren Abbau der Eigenschaften durch die von der Beschichtung herrührende Verunreinigung. Die beschichtete Folie nach dieser Erfindung bietet also dem Folienhersteller einen deutlichen wirtschaftlichen Vorteil gegenüber vielen anderen beschichteten Folien wie z.B. Folien, die mit Vinylidenchlorid enthaltenden Polymeren beschichtet sind, wie in US-A-2 627 088 und US-A-2 698 240 beschrieben, die zum Polymerenabbau und zur Verfärbung neigen, wenn sie wie oben angegeben wiedergewonnen werden. Ähnliche Vorteile ergeben sich auch gegenüber den thermofixierten Acrylbeschichtungen, die harzförmige Vernetzungsmittel enthalten, wie sie in US-A-3 819 773 beschrieben sind, oder gegenüber den Vinylacetatpolymeren mit harzförmigen Vernetzungsmitteln gemäß GB-A-1 497 657.

Die erfindungsgemäße wieder extrudierte Folie kann soviel an beschichteter Regeneratfolie enthalten, daß ihr Gehalt an vernetzter acrylischer Beschichtung bis zu 1,0 Gew.-%, vorzugsweise 0,01 bis 0,5 Gew.-%, beträgt. Die wieder extrudierte Folie kann als Fertigfolie oder als Trägerfolie für die hier beschriebenen vernetzten acrylischen Beschichtungen oder andere Haftvermittlerbeschichtungen aus dem Stand der Technik verwendet werden.

Eine mit der erfindungsgemäßen Zusammensetzung beschichtete Polyesterfolie eignet sich ausgezeichnet als Trägerfolie für die Herstellung von lichtempfindlichen reprografischen Filmen. Bei der Herstellung solcher Filme wird auf eine Oberfläche der haftvermittlerbeschichteten Polyesterfolie eine lichtempfindliche Beschichtung aufgebracht, die aus einer Lösung eines eine lichtempfindliche Diazoniumverbindung enthaltenden oder damit imprägnierten harzförmigen Bindemittels in einem organischen Lösemittel besteht, und die lichtempfindliche Beschichtung wird anschließend getrocknet. Für diesen Zweck geeignete harzförmige Bindemittel sind z.B. Celluloseacetobutyrat, Celluloseacetat, Celluloseacetopropionat sowie Vinylpolymere wie z.B. Polyvinylacetat. Als Lösemittel sind z.B. Aceton, Methylethylketon, Methylisobutylketon, Ethylenglykolmonomethylether und Mischungen dieser Substanzen geeignet. Die reprografischen Beschichtungen und die Verfahren zu ihrer Aufbringung und Verwendung sind bekannt.

In gleicher Weise stellt die erfindungsgemäß haftvermittlerbeschichtete Polyesterfolie ein ausgezeichnetes Substrat für das Aufbringen von Mattbeschichtungen dar, wodurch die Folie als Zeichenmaterial zu verwenden ist. Diese Mattbeschichtungen können auf einer organischen Zusammensetzung aus einem harzförmigen Bindemittel und einem darin feinverteilten, als "Körnungsmittel" dienenden partikelförmigen Material basieren. Als harzförmige Bindemittel können die bei den reprografischen Anwendungen bereits genannten harzförmigen Materialien sowie Acryl- oder Methacrylharze verwendet werden. Die organischen Lösemittel können ebenfalls die oben aufgeführten Lösemittel sein. Zu den partikelförmigen Materialien (Partikelgröße unter 10 »m) zählen Tone oder SiO₂. In solchen Mattbeschichtungen können auch andere Bestandteile wie z.B. Eindickungsmittel oder Dispergiermittel enthalten sein. Mattbeschichtungen dieser Art sind z.B. aus GB-A-1 072 122 und US-A-3 624 021 bekannt.

Die erfindungsgemäße haftvermittlerbeschichtete Folie kann ferner als Verpackungs- oder Etikettierungsmaterial eingesetzt werden. Verglichen mit unbeschichteter Folie weisen die haftvermittlerbeschichteten Folien eine verbesserte Haftung gegenüber Druckfarben auf der Basis von organischen Lösemitteln auf. Diese Druckfarben können in organischen Lösemitteln hergestellte Dispersionen oder Lösungen von Pigmenten und/oder Farbstoffen in Verbindung mit Acrylharzen oder anderen Harzen und Eindickungsmitteln sein.

Das ausgezeichnete Haftvermögen der mit den erfindungsgemäßen vernetzten Acrylcopolymerschichten haftvermittlerbeschichteten Polyesterfolie an darauf aufgebrachten Beschichtungen auf der Basis von organischen Lösemitteln macht eine solche Folie für den Hersteller von fertigen reprografischen, grafischen und Verpackungsmaterialien universeller nutzbar.

In den anschließend beschriebenen Ausführungsbeispielen wird die Erfindung näher erläutert.

Die reprografische Haftung wurde mit einem Lack der folgenden Zusammensetzung ermittelt: 9 Gew.-Teile Celluloseacetobutyrat (20-Sekunden-Type), gelöst in einer Mischung aus 88 Gew.-Teilen Ethylenglykolmonomethylether und 3 Gew.-Teilen Methylethylketon, wobei Rhodamin B als Farbstoff zugesetzt wurde (3 Gew.-Teile einer 1%igen Lösung von Rhodamin B in n-Butanol). Der Lack wurde mit Hilfe eines drahtumwickelten Stabes (Meyer-Rod Nr. 70) auf die beschichtete Oberfläche der Folie aufgetragen und 5 min bei 60°C im Ofen getrocknet. Mit einem Skalpell wurde eine Kreuzschraffierung in die Beschichtung eingeritzt, auf die schraffierte Fläche ein Klebeband (Scotch Tape 610) aufgedrückt, mit dem Fingernagel fest angedrückt und dann rasch von der Folie abgezogen. Der auf der schraffierten Fläche zurückbleibende Lack wurde als Prozentanteil des insgesamt aufgetragenen Lackes angegeben, d.h. kein Lack abgezogen = 100% Haftung, der gesamte Lack abgezogen = 0% Haftung, die Haftungswerte zwischen 0 und 100% bezeichnen jeweils den auf der Folie zurückgebliebenen Lackanteil. Der Versuch wurde zweimal an zwei Folienbögen (also insgesamt an vier Stellen) durchgeführt, und als Haftungswert wurde der Wert des Prüfbereichs mit dem schlechtesten Ergebnis angegeben.

Repro-Haftungsversuche, die eine Haftung von weniger als 95% ergeben, gelten generell als nicht annehmbar, während Ergebnisse von annähernd 100% oder gleich 100% die angestrebte Norm sind.

### Beispiel 1

Ein Latex mit 4,5 Gew.-% Feststoffgehalt, bestehend aus einem Copolymeren aus 60 Gew.-% Methylmethacrylat, 35 Gew.-% Ethylacrylat und 5 Gew.-% N-Methylolacrylamid und einem Tensid wurde nach dem folgenden Verfahren als Haftvermittlerbeschichtung auf Polyesterfolie aufgebracht:

Aus Originalpolyethylenterephthalatrohstoff wurde eine Schmelze hergestellt und diese durch eine Breitschlitzdüse auf eine auf etwa 20°C gehaltene Gießwalze extrudiert, wo sie zu einer gegossenen Folie erstarrte. Die gegossene Folie wurde im Streckverhältnis von etwa 3,6 : 1 längsgestreckt, wobei sie auf einer Temperatur von 80°C gehalten wurde.

Die längsgestreckte Folie wurde in einem Coronaentladegerät coronabehandelt und danach durch Reversgravurbeschichtung mit dem oben beschriebenen Latex beschichtet.

Die längsgestreckte, coronabehandelte und beschichtete Folie wurde bei einer Temperatur von etwa 100°C getrocknet. Danach wurde die Folie im Streckverhältnis 3,6 : 1 quergestreckt, so daß man eine biaxial gestreckte Folie erhielt. Die biaxial gestreckte Folie wurde bei 230°C thermofixiert. Diese Wärmebehandlungen führten zum Vernetzen der Haftvermittlerbeschichtung. Das Trockengewicht der Beschichtung betrug ca. 0,035 g/m² bei einer Beschichtungsdicke von etwa 0,025 »m und einer Dicke der Trägerfolie von ca. 75 »m.

### Beispiel 2

Beispiel 1 wurde wiederholt, jedoch in diesem Fall der Folienextruder mit einem Polyethylenterephthalatpolymeren beschickt, das aus einer Mischung von ca. 50 Gew.-% an Originalpolyesterrohstoff und 50 Gew.-% an Regenerat aus der Wiedergewinnung (Zerkleinern, Extrusion bei 290°C und Pelletisieren) der gemäß Beispiel 1 hergestellten haftvermittlerbeschichteten Folie bestand.

### Beispiel 3 (Vergleichsbeispiel)

Beispiel 1 wurde wiederholt, jedoch enthielt das in dem Latex anwesende Copolymere in diesem Fall etwa äquimolare Anteile von Ethylacrylat und Methylmethacrylat, copolymerisiert mit 5 Gew.-% Methacrylamid, und des weiteren 20%, bezogen auf das Trockengewicht` eines Melamin-Formaldehydharzes als Vernetzungsmittel.

### Beispiel 4 (Vergleichsbeispiel)

Beispiel 3 wurde wiederholt, jedoch wurde in diesem Fall der Folienextruder mit einem Polyethylenterephthalatpolymeren beschickt, das sich aus einer Mischung von etwa 50% Originalpolyesterrohstoff und 50% Regenerat aus der Wiedergewinnung der nach Beispiel 3 hergestellten haftvermittlerbeschichteten Folie zusammensetzte.

Jede der nach den Beispielen 1 bis 4 hergestellten Folien wurde wie oben erwähnt auf ihre reprografische Haftung geprüft und ergab eine Haftung von mehr als 95%, verglichen mit einer unbeschichteten Vergleichstolle, die eine Haftung von 0% ergab.

Die Verbesserung bei der Regenerierbarkeit von Polyesterfolie mit Haftvermittlerbeschichtung aus den erfindungsgemäßen vernetzten Acrylcopolymeren, verglichen mit haftvermittlerbeschichteten Folien aus dem Stand der Technik, deren Beschichtungen auf thermofixierten Acrylhaftvermittlern basieren, wurde durch vergleichende Regenerierungsversuche an den beschichteten Folien aus Beispielen 2 und 4 ermittelt. In beiden Fällen wurde eine 75 »m dicke PET-Folie mit einer Trockenschichtdicke von etwa 0,025 »m beschichtet.

Die Regenerierbarkeit dieser beiden Folien wurde so beurteilt, daß man jede Probe aus beschichteter Folie zu Flocken zerkleinerte, diese bei einer Temperatur von etwa 290°C durch einen Strangextruder führte, um die Flocken zu schmelzen, und das resultierende Strangextrudat anschließend zu Pellets zerschnitt. Die entstandenen Pellets wurden dann jeweils bei 290°C erneut extrudiert und zusätzlich zweimal pelletisiert.

Eine visuelle Prüfung der relativen Verfärbung der so hergestellten wärmebehandelten Pelletproben zeigte, daß die Pellets, die die beschichtete Folie aus Beispiel 4 enthielten, wesentlich gelber und dunkler waren als die Pellets, die die beschichtete Folie aus Beispiel 2 enthielten.

## Patentansprüche

1. Schmelzextrudierte, orientierte, selbsttragende Polyesterfolie mit einer durchgehenden, ein- oder beidseitig aufgebrachten, vernetzten acrylischen Haftvermittlerbeschichtung, dadurch gekennzeichnet, daß die Polyesterfolie aus einer Mischung von
A) Originalpolyesterrohstoff mit
B) bei der Herstellung von haftvermittlerbeschichteten Polyesterfolien anfallendem Regenerat
besteht und daß die Haftvermittlerbeschichtung im wesentlichen aus einem oder mehreren Copolymeren gebildet ist, jeweils bestehend aus:
i) mindestens 50 Gew.-% acrylischen und/oder methacrylischen Monomeren;
ii) 1 bis 15 Gew.-%, eines Monomeren mit einer funktionellen Gruppe, die befähigt ist, in copolymerisiertem Zustand unter Einwirkung von erhöhten Temperaturen intermolekulare Vernetzungen auszubilden und die ausgewählt ist aus der Gruppe umfassend Amino-, Säureamid-, Säureanhydrid-, N-methylol-, Carboxyl-, Hydroxyl- und Isocyanatgruppen
iii) einem oder mehreren einfach ethylenisch ungesättigten, halogenfreien Monomeren in einer Menge bis zu 49 Gew.-%;
wobei die Prozentangaben jeweils auf das Gesamtgewicht des die Haftvermittlerbeschichtung bildenden Copolymeren bezogen sind.

2. Folie nach Anspruch 1, dadurch gekennzeichnet, daß die Polyesterfolie eine biaxial orientierte Polyethylenterephthalatfolie ist und daß die Trockenschichtdicke der Haftvermittlerbeschichtung im Bereich von 0,0025 bis 0,25 »m liegt.

3. Folie nach Anspruch 1 oder 2, dadurch gekennzeichnet, daß die Polyesterfolie aus einer Mischung von
A) 30 bis 95 Gew.-% Originalpolyesterrohstoff mit
B) 5 bis 70 Gew.-% Regenerat besteht,
wobei die Prozentangaben jeweils auf das Gesamtgewicht der die Polyesterfolie bildenden Mischung bezogen sind.

4. Folie nach einem der Ansprüche 1 bis 3, dadurch gekennzeichnet, daß das eine funktionelle Gruppe enthaltende Monomere N-methylolacrylamid oder N-methylolmethacrylamid in einer Menge von 5 bis 10 Gew.-%, ist.

5. Folie nach einem der Ansprüche 1 bis 4, dadurch gekennzeichnet, daß das acrylische und/oder methacrylische Monomere der Haftvermittlerbeschichtung (Komponente i) bevorzugt niedere Alkylester der Acrylsäure bzw. Methacrylsäure in einer Menge von 70 bis 95 Gew.-% vorliegt, besonders bevorzugt als Ethylacrylat und/oder Methylmethacrylat.

6. Folie nach einem der Ansprüche 1 bis 5, dadurch gekennzeichnet, daß das Polyestermaterial der Polyesterfolie 0,01 bis 1,0 Gew.-% von dem die Haflvermittlerbeschichtung bildenden Copolymeren enthält.

7. Verfahren zur Herstellung einer Folie nach einem der Ansprüche 1 bis 6, bei dem durch Schmelzextrusion zunächst eine amorphe Polyesterfolie hergestellt wird, die danach durch Strecken in eine oder zwei Richtungen orientiert und hitzefixiert wird, dadurch gekennzeichnet, daß die Haftvermittlerbeschichtung entweder vor dem Strecken in eine Richtung oder nach dem Strecken in eine Richtung, aber vor dem Strecken in die andere Richtung aus wäßrigem Medium auf die Polyesterfolie aufgebracht wird.

8. Verfahren nach Anspruch 7, dadurch gekennzeichnet, daß der mit Haftvermittlerbeschichtung beschichtete Folienabfall zerkleinert, bei Temperaturen zwischen 270°C und 310°C geschmolzen und vor der Extrusion mit dem Originalpolyesterrohstoff vermischt wird.

9. Verfahren nach Anspruch 7, dadurch gekennzeichnet, daß der mit Haftvermittlerbeschichtung beschichtete Folienabfall zerkleinert und zu Pellets verdichtet wird, dann die Pellets mit 30 bis 95 Gew.-%, bevorzugt mit 50 Gew.-%, bezogen auf das Gesamtgewicht des Polyestermaterials, Granulat aus Originalpolyesterrohstoff vermischt werden und die Mischung geschmolzen und zur Folie extrudiert wird.

10. Verwendung einer Folie nach einem der Ansprüche 1 bis 6, hergestellt nach einem Verfahren nach einem der Ansprüche 7 bis 9 als Trägermaterial für lichtempfindliche Materialien, umfassend eine Lage aus harzartigem Bindemittel und lichtempfindlichem Diazoniumsalz, oder für graphische Materialien, umfassend eine Lage aus harzartigem Bindemittel und darin fein verteiltem partikelförmigem Material.

## Claims

1. Melt-extruded, oriented, self-supporting polyester film having a continuous cross-linked acrylic primer coating on one or both sides thereof, wherein the polyester film comprises a mixture of
A) virgin polyester with
B) reclaim obtained in the production of primer coated polyester films and wherein the primer coating is essentially formed of one or more copolymers each comprising:
i) at least 50 % by weight of acrylic and/or methyacylic monomers;
ii) 1 to 15 % by weight of a monomer with a functional group which, in the copolymerized state, is capable of inter-molecular crosslinking under the action of elevated temperatures, and which is selected from the group consisting of amino, acid amide, acid anhydride, N-methylol, caboxyl, hydroxyl and isocyanate groups;
iii) one or more monoethylenically unsaturated halogen-free monomers in a quantity of up to 49 %;
the percentages relating in each case to the total weight of the copolymer forming the primer coating.

2. The film according to claim 1, wherein the polyester film is a biaxially oriented polyethylene terephthalate film and the dry thickness of the primer coating is in the range from 0.0025 to 0.25 »m.

3. The film according to claim 1 or 2, wherein the polyester film comprises a mixture of
A) 30 to 95 % by weight of virgin polyester with
B) 5 to 70 % by weight of reclaim,
the percentages relating in each case to the total weight of the mixture forming the polyester film.

4. The film according to any of claims 1 to 3, wherein the monomer containing a functional group is N-methylolacrylamide or N-methylolmethacrylamide in a quantity of 5 to 10% by weight.

5. The film according to any of claims 1 to 4, wherein the acrylic and/or methacrylic monomer of the primer coating (component i), preferably a lower alkyl ester of acrylic acid or methyacrylic acid, is present in a quantity of 70 to 95 % by weight and is particularly preferably ethyl acrylate and/or methyl methacrylate.

6. The film according to any of claims 1 to 5, wherein the polyester material of the polyester film contains 0.01 to 1.0 % by weight of the copolymer forming the primer coating.

7. Process for the production of a film according to any of claims 1 to 6, the process comprising first preparing an amorphous polyester film by melt extrusion and then orienting the amorphous film by stretching in one or two directions and heat-setting, wherein the primer coating is applied to the polyester film from an aqueous medium, either prior to stretching in one direction or after stretching in one direction but prior to stretching in the other direction.

8. The process according to claim 7, wherein the scrap film coated with primer coating is comminuted, melted at temperatures between 270 °C and 310 °C and mixed with the virgin polyester prior to extrusion.

9. The process according to claim 7, wherein the scrap film coated with primer coating is comminuted and compressed to give pellets, the pellets are then mixed with 30 to 95 % by weight, preferably with 50 % by weight, relative to the total weight of the polyester material, of virgin polyester granules and the mixture is melted and extruded into a film.

10. Use of a film according to any of claims 1 to 6, produced by a process according to any of claims 7 to 9, as a support material for photosensitive materials comprising a layer of resinous binder and photosensitive diazonium salt, or for graphic materials comprising a layer of resinous binder which contains a finely divided particulate material.

## Revendications

1. Pellicule de polyester extrudée à l'état fondu, orientée, autoporteuse, comportant un revêtement acrylique réticulé favorisant l'adhérence, continu, appliqué sur un côté ou sur les deux, caractérisée en ce que la pellicule de polyester est constituée d'un mélange de
A) une matière première polyester initiale avec
B) un produit de régénération formé lors de la fabrication de pellicules de polyester portant un revêtement favorisant l'adhérence
et en ce que le revêtement favorisant l'adhérence est essentiellement constitué d'un ou plusieurs copolmères composé chacun de :
I) au moins 50 % en poids de monomère acrylique et/ou méthacrylique;
II) de 1 à 15 % en poids d'un monomère présentant un groupe fonctionnel qui est capable, à l'état copolymérisé, de former des réticulations intermoléculaires sous l'effet de températures élevées; et qui est choisi parmi des groupes amino, amido, anhydride d'acide, N-méthylol, carboxy, hydroxy et isocyanate;
III) un ou plusieurs monomères à une seule insaturation éthylénique, exempts d'halogène, en une quantité allant jusqu'à 49 % en poids;
les pourcentages étant donnés dans chaque cas par rapport au poids total du copolymère constituant le revêtement favorisant l'adhérence.

2. Pellicule selon la revendication 1, caractéisée en ce que la pellicule de polyester est une pellicule de poly(téréphtalate d'éthylène) orientée biaxialement, et en ce que l'épaisseur de couche sèche du revêtement favorisant l'adhérence est dans la plage de 0,0025 à 0,25 »m.

3. Pellicule selon la revendication 1 ou 2, caractérisée en ce que la pellicule de polyester est constituée d'un mélange de
A) 30 à 95 % en poids de matière première polyester initiale avec
B) 5 à 70 % en poids de produit de régénération,
les pourcentages étant donnés chacun par rapport au poids total du mélange constituant la pellicule de polyester.

4. Pellicule selon l'une des revendications 1 à 3, caractérisée en ce que le monomère contenant un groupe fonctionnel est de préférence le N-méthylolacrylamide ou le N-méthylolméthacrylamide en une quantité de 5 à 10 % en poids.

5. Pellicule selon l'une des revendications 1 à 4, caractérisée en ce que le monomère acrylique et/ou méthacrylique du revêtement favorisant l'adhérence (composant I) consiste de préférence en des esters alkyliques de l'acide acrylique ou méthacrylique en une quantité de 70 à 95 % en poids, en particulier sous forme d'acrylate d'éthyle et/ou de méthacrylate de méthyle.

6. Pellicule selon l'une des revendications 1 à 5, caractérisée en ce que le matériau polyester de la pellicule de polyester contient de 0,01 à 1,0 % en poids du copolymère constituant le revêtement favorisant l'adhérence.

7. Procédé pour la fabrication d'une pellicule selon l'une des revendications 1 à 6, dans lequel on prépare d'abord par extrusion de masse fondue une pellicule de polyester amorphe qui est ensuite orientée par étirage dans une ou deux directions, puis thermofixée, caractérisé en ce que l'on applique sur la pellicule de polyester le revêtement favorisant l'adhérence, à partir d'un milieu aqueux, soit avant l'étirage dans une direction, soit après l'étirage dans une direction, mais avant l'étirage dans l'autre direction.

8. Procédé selon la revendication 7, caractérisé en ce que les déchets de pellicule revêtue avec un revêtement favorisant l'adherence sont fragmentés, fondus à des températures comprises entre 270 et 310°C, puis mélangés avec la matière première polyester initiale, avant l'extrusion.

9. Procédé selon la revendication 7, caractérisé en ce que l'on fragmente et comprime en granules les déchets de feuille revêtue avec un revêtement favorisant l'adhérence, puis on mélange les granules avec de 30 à 95 % en poids, de préférence avec 50 % en poids, par rapport au poids total du matériau polyester, de produit granulé constitué de matière première polyester initiale, puis on fait fondre le mélange et on l'extrude en la pellicule.

10. Utilisation d'une pellicule selon l'une des revendications 1 à 6, fabriquée selon un procédé selon l'une des revendications 7 à 9, en tant que matériau de support pour des matériaux photosensibles comprenant une couche de liant de type résine et un sel de diazonium photosensible, ou pour des matériaux graphiques comprenant une couche de liant de type résine et un matériau particulaire finement divisé contenu dans celle-ci.
